# EUROPEAN PATENT SPECIFICATION

(11) **EP 0 446 289 B1**
(45) Date of publication and mention of the grant of the patent: **16.02.1994**
(21) Application number: 90900780.9
(22) Date of filing: 01.12.1989
(51) Int. Cl.: B66D 3/10, F16H 55/50

(54) **A ROPE BLOCK**
SEILKLOBEN
CHAPE DE PALAN A CABLE

(30) Priority: 02.12.1988 DK 6757/88
(43) Date of publication of application: 18.09.1991
(73) Proprietor: FREDERIKSEN, Gert Hans, DK-7100 Vejle (DK)
(72) Inventor: FREDERIKSEN, Gert Hans, DK-7100 Vejle (DK)
(74) Representative: Jensen, Peter Kim
(86) International application number: DK8900285
(87) International publication number: WO9006278

(56) References cited:
- DE-C- 809 119
- DE-C- 827 244
- FR-A- 773 741
- FR-A- 790 646
- GB-A- 118 594
- GB-A- 288 418

## Description

### Technical Field

The invention relates to a rope block comprising a sheave, a sheave housing with fixedly mounted radial bearings supporting said sheave.

### Background Art

Rope blocks of the above type are mainly used on board sailing boats and especially on board racing sailing boats where the block is usually mounted as the last block of a rope tackle, such as for instance in connection with a mainsail sheet. When for instance the helmsman is holding on to the so-called hauling member of the rope in the tackle, said rope member extends from the hand of the helmsman and directly to the above block mounted as the last block of the rope tackle. When the ratchet mechanism is activated the sheave can only follow the rotation when the helmsman hauls in the hauling member of the rope in the tackle, i.e. when he is hauling the rope towards himself. When the helmsman slackens the hauling member of the rope, the sheave cannot rotate in the opposite direction because of the friction between the rope and the sheave, and consequently the helmsman need only hold on to the hauling member of the rope by a force substantially weaker than the one by which the rope tackle is hauling in the block so as to avoid a slackening of the rope.

In periods it is, however, often necessary to deactivate the ratchet mechanism such that the sheave can rotate freely in both directions, such as for instance when it is necessary quickly to slacken or haul in the rope. The latter procedure necessitates that the helmsman by one hand activates a ratchet, a slide means or the like situated on the outside of the block. By all conventional types of rope blocks the above procedure is difficult to carry out when the rope tackle exerts a strong haul in the block. The latter is inter alia due to the fact that the ratchet can only be forced into the free wheel position with great difficulty by the helmsman simultaneously hauling in the rope in such a way that the high pressure in the ratchet mechanism is simultaneously relieved. It is therefore necessary to use both hands for carrying out the above procedure, which in turn unfortunately necessitates the assistance of an additional person. Attempts at carrying out the procedure repeatedly without hauling in the rope result in a ratchet mechanism being quickly worn or damaged.

The groove of the sheaves of the known rope blocks is provided with various types of grooves or teeth in order to increase the friction between the rope and the sheave. The effect aimed at is, however, not quite satisfactory, and often the rope is worn very quickly.

The sheaves of the conventional rope blocks are manufactured either by injection molding of an article of plastics or by assembling two identical, die cast, anodised aluminium articles. In both cases the surface of the groove is often quickly worn, and as far as the aluminium is concerned the anodic coating on the teeth in the groove is often quickly worn off in such a manner that the surface of said teeth is particularly vulnerable to corrosion, especially when said teeth come into contact with salt water.

### Disclosure Of Invention

The object of the invention is to provide a rope block of the above type, whereby the grooves of the sheave must present a high friction against the rope without wearing said rope or said groove, and furthermore present a long life.

The rope block according to the invention is characterized in that the rope-receiving groove of the sheave may be a surface smooth per se and provided with recesses at regular intervals along the periphery of the sheave. At high loads, the rope is pressed into the recesses and retained therein in a particularly reliable manner. As a result, neither the rope nor the sheave guide are significantly worn.

Moreover according to the invention the recesses may be formed as throughgoing openings extending parallel to the axis of rotation of the sheave from one side of said sheave to the other, whereby the sheave can be manufactured in an easy and inexpensive manner.

By a method of producing a sheave to be used in a rope block of the above type, cylindrical sectional bodies may be extruded, said bodies being provided with an inner toothing and identical recesses extending at regular intervals along the outer periphery of said sectional bodies, whereafter said sectional bodies are cut into radial planes interspaced a distance corresponding to the thickness of the sheave followed by a circumferential groove finally being shaped in the outer circumferential surface of the sheave. As a result the sheaves can be manufactured in an easier and less expensive manner compared to previous methods, and in addition the sheaves possess a higher strength and higher resistance to corrosion than the sheaves manufactured by the conventional methods.

### Brief Description of Drawings

The invention is described in greater detail below with reference to the accompanying drawing, in which
Fig. 1 is a side view of a particularly preferred embodiment of the rope block according to the invention.
Fig. 2 is a side view of the sheave and the sheave housing of the rope block of Fig. 1, whereby both side plates of the block and one half of the sheave housing have been removed in order to show the ratchet mechanism,
Fig. 3 is an axial, sectional view taken along the line III-III of Fig. 2 through the sheave and both halves of the sheave housing,
Fig. 4 is a side view of a portion of a sheave of another embodiment, and
Fig. 5 is an axial, sectional view taken along the line V-V of Fig. 4.

### Best Mode for Carrying Out the Invention

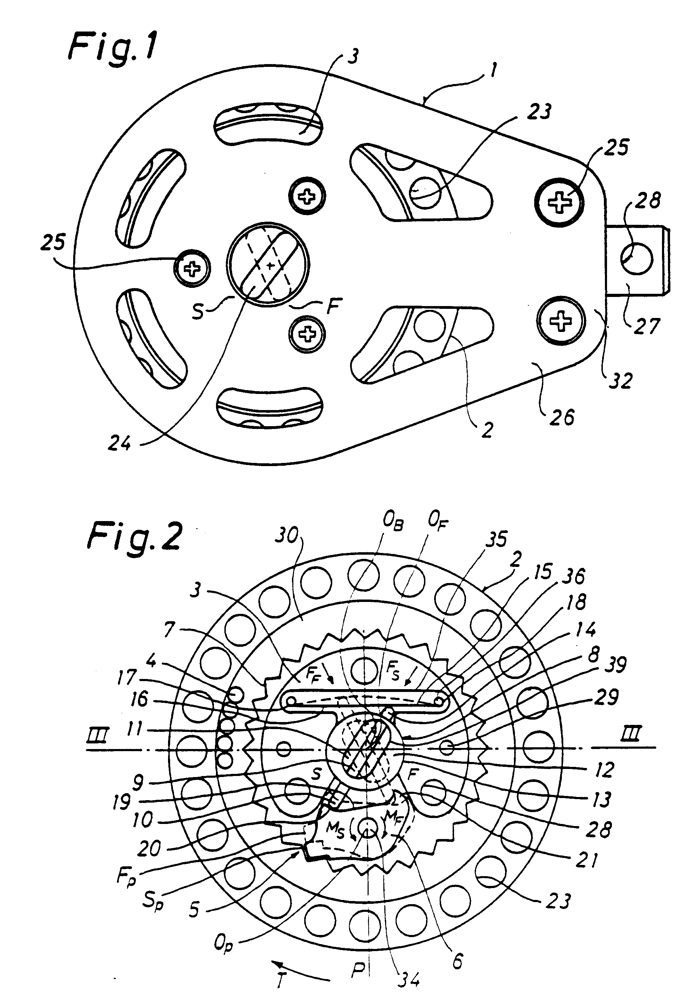

Fig. 1 illustrates a particularly preferred embodiment of a rope block 1 comprising a sheave housing 3 fixedly mounted between two side plates 26. The block 1 comprises furthermore a sheave 2 supported by means of radial bearings fixedly mounted inside the sheave housing 3. A ratchet mechanism 5, cf. Fig. 2, is situated inside the sheave housing 3. The side plates 26 of the rope block 1 are assembled about the sheave housing 3 by means of screws 25 screwed into bushings (not shown) provided with threads. A swivel member 27 is mounted at the head 32 of the rope block 1, said swivel member 27 comprising a transverse opening 28 for the mounting of a so-called shackle, whereby the block can be secured in a suitable fitting fixedly mounted for instance on a sailing boat.

The rope block 1 is particularly used on racing sailing boats and then often as the last block of a rope tackle, such as for instance in connection with a mainsail sheet, where the hauling member of the sheet extends directly from the rope block 1 and to for instance the helmsman, i.e. such that the hauling member of the rope extends from the block 1 to the hand of the helmsman. The rope block 1 is often used as the last block too in connection with a spinnaker sheet, where said sheet extends from the hand of an assisting person. The block may, however, also advantageously be provided with more than one sheave and one sheave housing (with or without the ratchet mechanism) in such a manner that so-called double blocks, triple blocks or fiddle blocks are provided.

When the ratchet mechanism 5 situated inside the sheave housing 3 is to be activated, the helmsman or the assisting person simply turns a pivot 24 from the outside of the sheave housing and by the fingers of one hand either from the position S in which the ratchet mechanism is activated and into the position F in which said ratchet mechanism 5 is deactivated and the sheave 2 is consequently free wheeling or rotating in the opposite direction. The latter procedure can be followed under all loads of the block even when a possible rope in the tackle exerts a strong pull in the block 1 and without necessitating that the helmsman or the assisting person hauls in the hauling member of the sheet rope during said procedure.

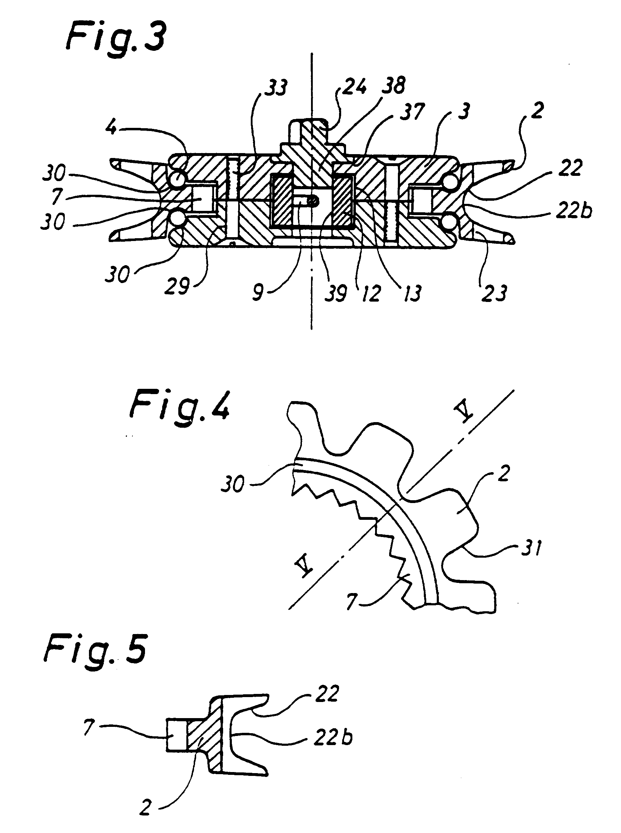

The structure and function of the sheave 2, the sheave housing 3 and the ratchet mechanism 5 are explained in greater detail below with particular reference to Figs. 2 and 3. The description of the function refers to the situation where a helmsman or an assisting person activates the ratchet mechanism from the outside by turning the pivot 24 between the two positions S and F.

The radial bearings supporting the sheave wheel 2 against the sheave housing 3 are preferably two ball bearings, the balls 4 running in circumferential grooves 30 shaped in the sheave wheel 2 and the two halves of the sheave housing 3. Fig. 2 only illustrates a few of the balls 4. The sheave 2 is furthermore provided with an outer circumferential groove 22 receiving the rope.

The sheave housing comprises advantageously two identical halves assembled by means of screws 33, cf. Fig. 3, said screws being screwed into openings 29 provided with threads. The two halves of the sheave housing 3 are furthermore provided with throughgoing openings 28 in such a manner that they can be mounted between the two side plates 26.

The ratchet mechanism 5 situated inside the sheave housing comprises a ratchet 6 pivotally mounted about an axis of rotation Oₚ, said ratchet co-operating with an inner toothed rim 7 on the sheave 2 and being prestressed by a spring means 8. The ratchet 6 is preferably pivotally mounted about a shaft pin 34 in the halves of the sheave housing 3.

The spring means 8 comprises a rotation body 12 pivotally mounted about an axis of rotation O_{F} in a guide 13 in the halves of the sheave housing 3. The guide 13 is centrally situated in the halves of the sheave housing 3 in such a manner that the axis of rotation O_{F} of the rotation body 12 coincides with the axis of rotation O_{B} of the sheave 2. An axially displaceable and spring-loaded bar 9 is situated in a guide 11 in the rotation body 12, said bar 9 extending diametrically through said centrally situated rotation body 12.

One end 10 of the bar 9 engages a substantially planar surface 19 on the ratchet 6. The ratchet 9 can be situated in two outer positions Sp and Fp corresponding to the situations in which the ratchet 6 engages the toothed rim 7 and in which said ratchet 6 disengages said toothed rim 7. The planar surface 19 of the ratchet 6 extends in a position between the two outer positions Sp anf Fp of said ratchet 6 perpendicular to a plane P extending between the axis of rotation O_{F} of the rotation body 12 and the axis of rotation Oₚ of the ratchet 6. Stop means 20, 21 are preferably provided at both ends of the surface 19, said stop means stopping one end 10 of the bar 9.

The opposite end 14 of the bar 9 engages the contact surface 16 of a flat spring 15. The ends 17 and 18 of the flat spring 15 are preferably loosely connected to the halves of the sheave housing 3. The spring 15 is preferably situated in a cavity 35 in each half 3 of the sheave housing in such a manner that it is compressed therein at the ends 17 and 18 preferably by means of pins 36. In the relaxed state the contact surface 16 of the flat spring 15 extends substantially perpendicular to the plane P in turn extending between the axis of rotation O_{F} of the rotation body 12 and the axis of rotation Oₚ of the ratchet 6, the centre of said flat spring 15 in addition being intersected by said plane P.

The above outer pivot 24 is pressed into a recess 37 in the half of the sheave housing 3 by means of the side plate 26 of the rope block 1. The pivot 24 engages furthermore the rotation body 12, one portion 38 of said pivot 24 extending into a recess 39 in the rotation body 12. The block 1 may be provided with a pivot 24 on both sides or arbitrarily only on one side, such as for instance when the block is to be mounted on the deck of a ship.

When the pivot 24 is in the position S, the ratchet mechanism 5 is activated and the sheave 2 can only rotate clockwise in a direction T. In this position of the pivot 24, the rotation body 12 and consequently also the bar 9 are in the position S too, whereby the bar 9 of the flat spring 15 is prestressed in the direction F_{S} towards the ratchet 6. In other words, the bar 9 actuates the ratchet 6 by a torque M_{S} in a direction counter-clockwise so as to rotate about its axis of rotation O_{p.} The position S of the rotation body 12 causes the bar 9 to reciprocate in the guide in said rotation body 12 against the effect of the spring 15 when said ratchet 6 is moved forward and backwards about its axis of rotation Oₚ by the teeth of the toothed rim 7 flushing with said ratchet. The latter procedure is a consequence of a hauling in the rope, whereby the sheave 2 rotates in the direction T clockwise about its axis of rotation O_{B}.

When the outer pivot 24 is turned into the position F while the rope block 1 is subjected to a high load, i.e. a high load is exerted on the engagement of the ratchet 6 with the toothed rim 7, the rotation body 12 and consequently also the bar 9 are turned too into the position F. As a result, the rotation body 12, the bar 9 and the spring 15 enter the positions indicated by dotted lines. During the latter turning of the rotation body 12, the ratchet 6 remains in its position Sp due to its engagement with the toothed rim 7. In the position F, the bar 9 subjects the ratchet 6 to a prestressing by way of the flat spring 15 in the direction F_{F}, which means that the bar 9 subjects the ratchet 6 to a torque M_{F} in a direction clockwise about the axis of rotation Oₚ of the ratchet 6.

Not until the rope is subjected to a slight hauling in again in such a manner that the sheave 2 rotates slightly about its axis of rotation O_{B} in a direction T clockwise and the ratchet 6 can disengage the toothed rim 7 and consequently rotate about its axis of rotation Oₚ, the prestressed bar 9 in the position F can be freely disposed in the direction F_{F} and consequently move the ratchet 6 into the position Fₚ, in which said ratchet 6 no longer engages the toothed rim 7. As a result, the sheave wheel 2 can rotate freely in both directions.

A further consequence of the above is that it is also possible to deactivate the ratchet mechanism 5 under high loads of the rope block 1 and consequently also of said ratchet mechanism 5 without thereby causing a fast wearing out or damaging of the toothed rim 7 and the ratchet 6.

When the pivot 24 is returned from the position F back into the position S, the ratchet 6 and the toothed rim 7 cannot be damaged either, because by being spring-loaded during the entire turning said ratchet 6 is not forced back.

Unintentional attempts at turning the pivot 24 out of one of the positions, for instance if a rope fouls the block or a person kicks said block, the pivot 24 is relatively well secured against turning because the bar 9 is subjected to a substantial increase of the prestressing in a direction towards the ratchet 6 when attempts at turning the rotation body 12 are made. In other words, a position including a "dead centre" for the bar 9 exists between the two positions S and F, said bar 9 being subjected to the highest possible prestressing by the spring 15 in said "dead centre".

The halves of the sheave housing 3, the ratchet 6 and the rotation body 12 are preferably made of Delrin. Combined with the bar 9, the flat spring 15, the shaft pin 34 and the pins 36 being made of stainless steel, the Delrin provides a particularly strong and reliable ratchet mechanism resistant to salt water.

The sheave 2 is according to the invention preferably made of an aluminium extrudate. The extrudate is a cylindrical sectional body with an inner toothing and identical recesses at regular intervals along the inner periphery. The aluminium extrudate is cut in radial planes interspaced a distance corresponding to the thickness of the sheave 2. Finally a circumferential groove 22 is shaped in the surface of the outer periphery of the sheaves 2.

According to a particularly advantageous embodiment the rope-receiving groove 22 of the sheave 2 may as shown in Fig. 3 be a surface smooth per se and provided with throughgoing openings 23 at regular intervals along the periphery of the sheave 2. The throughgoing openings 23 extend parallel to the axis of rotation O_{B} of the sheave 2 from one side of said sheave 2 to the other, i.e. the recesses are shaped as circular cavities during the extrusion. As a result, a particularly good retaining of the rope in the guide 22 of the sheave 2 is obtained, said rope being squeezed out into the openings at an increasing pull, whereby neither the rope nor the preferably anodised aluminium sheave 2 are worn significantly.

In the embodiment of the sheave 2 shown in Fig. 3, the bottom 22_{B} of the groove 22 thereof extends more inwards towards the centre of the sheave 2 than the openings 23. This embodiment is particularly advantageous in connection with some types and dimensions of rope.

Fig. 4 illustrates another advantagoeus embodiment of the sheave 2, where the recesses have been shaped during the extrusion as channels at the periphery. In this manner a sheave 2 is provided with a periphery interrupted by notches 31 extending from the outside and radially inwards towards the centre of the sheave 2. In this embodiment the bottom 22_{B} of the guide 22 does not extend as far towards the centre of the sheave 2 as the notches 31, such a feature being advantageous in connection with other types and dimensions of rope.

## Claims

1. A rope block comprising a sheave and a sheave housing with fixedly mounted radial bearings supporting said sheave, **characterised** in that the rope-receiving groove (22) of the sheave is a surface smooth per se and provided with recesses (23) at regular intervals along the periphery of the sheave (2).

2. A block as claimed in claim 1, **characterised** in that the recesses are formed as through-going openings (23) extending parallel to the axis of rotation (O_{B}) of the sheave (2) from one side of said sheave (2) to the other.

3. A block as claimed in claim 2, **characterised** in that the openings (23) are of a circular cross section.

4. A block as claimed in claim 2, **characterised** in that the openings are formed as notches (31) extending from the outside like a U and radially inwards towards the centre of the sheave (2) in such a way that the periphery of the sheave (2) is interrupted.

5. A method of producing a sheave to be used in a rope block according to one or more of the preceding claims 1 to 4, **characterised** by extruding cylindrical sectional bodies provided with an inner toothing (7) and identical recesses (31,23) extending at regular intervals along the outer periphery of said sectional bodies, whereafter said sectional bodies are cut into radial planes interspaced corresponding to the thickness of the sheave (2), and by finally shaping a circumferential groove (22) in the outer circumferential surface of the sheave (2).

## Patentansprüche

1. Seilkloben mit einer Seilscheibe und einem Seilscheibengehäuse mit starr befestigten Radiallagern, die die Seilscheibe lagern,
dadurch **gekennzeichnet,**
daß die das Seil aufnehmende Nut (22) der Seilscheibe eine als solche glatte Oberfläche ist, die mit Ausnehmungen (23) unter regelmäßigen Abständen entlang des Umfanges der Seilscheibe (2) versehen ist.

2. Seilkloben nach Anspruch 1,
dadurch **gekennnzeichnet,**
daß die Ausnehmungen als durchgehende Öffnungen (23) ausgebildet sind, die sich parallel zur Drehachse O_{B} der Seilscheibe (2) von einer Seite der Seilscheibe zur anderen erstrecken.

3. Seilkloben nach Anspruch 2,
dadurch **gekennzeichnet,**
daß die Öffnungen (23) einen kreisförmigen Querschnitt aufweisen.

4. Seilkloben nach Anspruch 2,
dadurch **gekennzeichnet,**
daß die Öffnungen als Kerben (31) ausgebildet sind, die sich von der Außenseite in Form eines U und in Radialrichtung nach innen auf den Mittelpunkt der Seilscheibe (2) derart erstrecken, daß der Umfang der Seilscheibe (2) unterbrochen ist.

5. Verfahren zur Herstellung einer Seilscheibe zur Verwendung in einem Seilkloben gemäß einem oder mehreren der vorhergehenden Ansprüche 1 bis 4,
dadurch **gekennzeichnet,**
daß zylindrische Formkörper mit einer Innenverzahnung (7) und identischen Ausnehmungen (31, 23) hergestellt werden, die sich unter regelmäßigen Abständen entlang des Außenumfanges der Formkörper erstrecken, worauf die Formkörper in radialen Ebenen unterteilt werden, die einen der Dicke der Seilscheibe entsprechenden Abstand voneinander aufweisen, und daß schließlich eine Umfangsnut (22) in der Außenumfangsoberfläche der Seilscheibe (2) ausgeformt wird.

## Revendications

1. Palan à câble comprenant une poulie et une chape de poulie à paliers radiaux montés de façon fixe et supportant ladite poulie, caractérisé en ce que la gorge de réception de câble (22) de la poulie est une surface lisse en elle-même et comportant des évidements (23) à intervalles réguliers le long de la périphérie de la poulie (2).

2. Palan suivant la revendication 1,
caractérisé en ce que les évidements sont sous la forme de trous traversants (23) parallèles à l'axe de rotation (O_{B}) de la poulie (2) et s'étendant d'une face à l'autre de la dite poulie (2).

3. Palan suivant la revendication 2,
caractérisé en ce que les trous (23) ont une section transversale circulaire.

4. Palan suivant la revendication 2,
caractérisé en ce que les trous sont sous la forme d'encoches (31) en forme de U s'étendant à partir de l'extérieur et radialement vers l'intérieur, vers le centre de la poulie (2), d'une manière telle que la périphérie de la poulie (2) est interrompue.

5. Méthode de fabrication d'une poulie utilisable dans un palan à câble suivant une ou plusieurs des revendications précédentes 1 à 4, caractérisée en ce qu'elle comprend l'extrusion de pièces à section cylindrique comportant une denture intérieure (7) et des évidements identiques (31,23) qui s'étendent à intervalles réguliers le long de la périphérie extérieure desdites pièces cylindriques, après quoi on coupe lesdites pièces dans des plans radiaux mutuellement espacés d'une distance correspondant à l'épaisseur de la poulie (2) et on forme finalement une gorge circonférentielle (22) dans la surface circonférentielle extérieure de la poulie (2).
